# EUROPEAN PATENT APPLICATION

(11) **EP 1 030 230 A1**
(43) Date of publication of application: **23.08.2000**
(21) Application number: 99830045.3
(22) Date of filing: 29.01.1999
(51) Int. Cl.: G05B 19/4065

(54) **A machine tool for working sheet metal**

(71) Applicant: RAINER S.r.l., I-40012 Calderara di Reno (Bologna) (IT)
(72) Inventor: Raimondi, Stefano, 40133 Bologna (IT)
(74) Representative: Eccetto, Mauro

(57) **Abstract**

A machine tool (1) includes a work surface (4) for supporting a metal sheet (3), a work unit (5) operable to carry out the work on the sheet (3), positioning means (6) for moving the sheet (3) over the work surface (4) and towards and away from the work unit (5), and an electronic control unit (7) for managing the work cycle carried out by the work unit (5) and the said positioning means (6). The machine (1) also includes a system (2), controlled by the unit (7), for checking by means of a device (14) emitting a laser beam the inner and outer perimeter profiles of the sheet (3) on the work surface (4), on completion of the work cycle.

## Description

The present invention relates to a machine tool for working sheet metal.

It is known that one of the main problems encountered with machine tools for working sheet metal lies in the ability to assess quickly and accurately if the work has been executed correctly. In the prior art, the worked sheet is removed manually from the work surface on which it has been worked and carried to a second work surface where a laser instrument checks all the dimensional characteristics of the sheet. The aforesaid instrument includes a sheet which reflects along the same direction as that of the laser beam and is placed on the second work surface, and a device which emits laser rays and is operable to scan along a first axis and along a second axis perpendicular to the first in order to measure the inner and outer perimeter profiles of the sheet and thus to check the work previously carried out thereon. The measurements can then be used to check that the work has been executed correctly.

It is clear from the above that such a control system is slow and costly as it involves manual intervention for placing each sheet on the second work surface and then removing it again; in particular, it takes longer to carry out this monitoring procedure than to work a sheet. This means that by the time it becomes apparent that a sheet has not been worked correctly, and therefore that the machine tool has had operating problems, several sheets have already been worked. As a result, a large number of sheets need to be discarded, even for small imperfections in working.

The object of the present invention is to provide a machine tool for working sheet metal which is free from the disadvantages described above.

This object is achieved according to the invention by providing a machine tool for working sheet metal of a type which includes:
a work surface for supporting a sheet;
a work unit operable to work the said sheet;
means for moving the said sheet on the said work surface along first and second horizontal orthogonal axes;
an electronic control unit for managing the operating cycle which controls the said work unit and the said means;
   characterised in that it includes a system, controlled by the said control unit, for checking the inner and outer perimeter profiles of the said sheet on the said work surface on completion of a working cycle by means of a laser beam source.

The present invention will now be described with reference to the appended drawings, which illustrate one embodiment thereof by way of non-limitative example, in which:
Figure 1 is a plan view of the machine tool forming the subject of the present invention;
Figure 2 is a partially sectioned side view of a part of the machine of Figure 1; and
Figure 3 is a cross section of a component of the device of Figure 2.

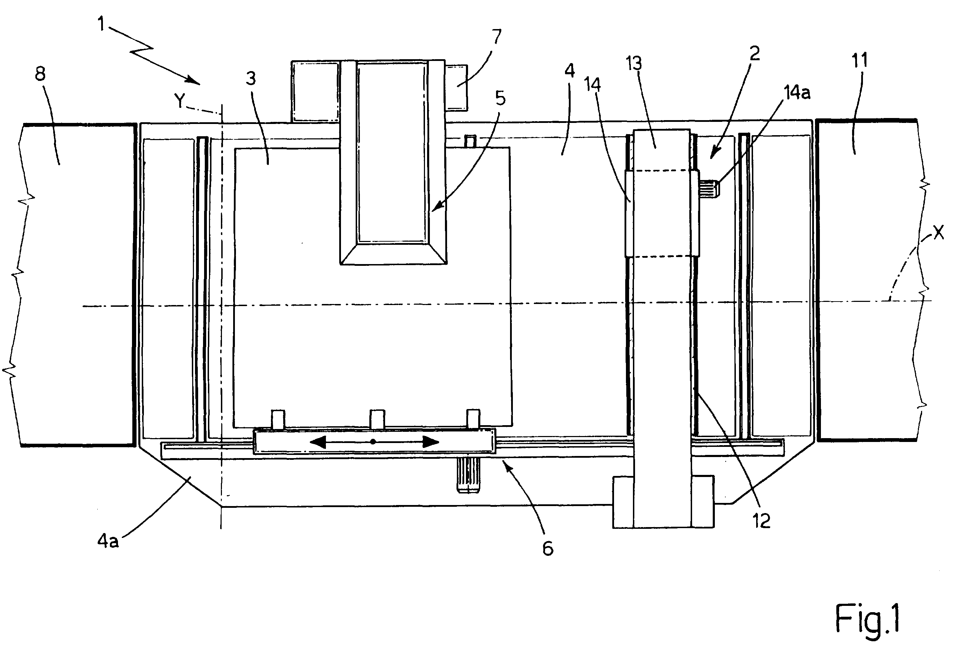

As illustrated in Figure 1, a machine tool, generally indicated 1, for working sheet metal has a system 2 for checking that the sheet 3 has been correctly worked.

The machine 1 includes:
a work surface 4, supported by a base 4a, on which the sheet 3 rests;
a unit 5 operable to work the sheet 3;
positioning means 6 for moving the sheet 3 on the surface 4 towards and away from the said unit 5;
an electronic control unit 7 for managing the working cycle and controlling the work unit 5 and the positioning means 6.

The positioning means 6 are operable to move the sheet 3 over the work surface 4 along two horizontal, orthogonal axes X and Y. Beside opposite ends of the work surface 4, along the axis X, the machine 1 also includes a station 8 for loading the sheets 3 onto the work surface 4 and a station 11 for unloading the sheets 3 from the work surface 4. The work unit 5 is operable to make a plurality of cuts in the sheet 3 so as to obtain a predetermined outer perimeter profile and apertures with predetermined perimeter profiles. The cuts can be made using punching and/or laser technology.

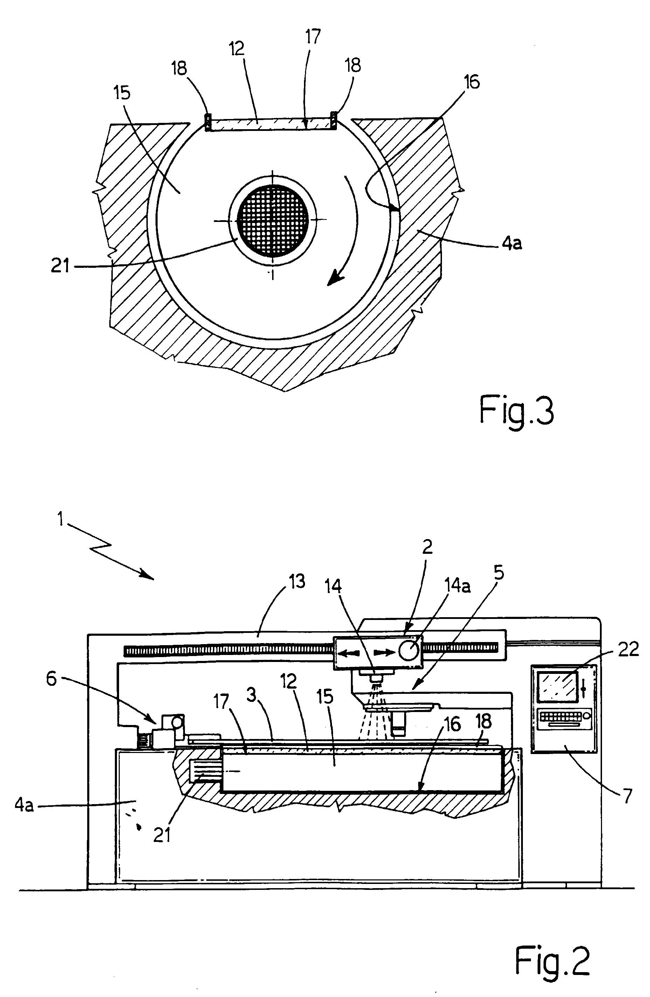

With reference to Figures 2 and 3, the system 2 includes:
a reflector plate 12 movable between a first position in which it is substantially coplanar with the upper surface of the work surface 4 and a second position in which it is within the base 4a, at a lower level than the upper surface of the work surface 4; the said plate 12 having a longitudinal axis parallel to the axis Y.
a cross member 13 arranged above and at a predetermined distance from the work surface 4, arranged in particular above the plate 12 when this is in the said first position, the longitudinal axis of the said cross member 13 being parallel to the axis Y and lying, more precisely, in the same vertical plane as the longitudinal axis of the plate 12; and
a device 14 (of a known type) emitting a laser beam, carried by the cross member 13 and movable along the longitudinal axis thereof, driven by an electric motor 14a controlled by the control unit 7.

With reference to Figures 2 and 3, the system 2 includes a rotatable body 15 installed in a cavity 16 formed in the work surface 4. The body 15 is substantially cylindrical and its axis of rotation is parallel to the axis Y. The external surface of the body 15 has a facet extending along its entire length, the facet being engaged by the plate 12. At either longitudinal edge of the plate 12, the body 15 supports a respective **strip** 18 of deformable plastics material; the strips 18 extend above the upper surface of the plate 12, whereby the metal sheet 3 rests on the said strips 18 during the step in which the dimensions of the said sheet 3 are checked. An electric motor 2, controlled by the control unit 7, rotates the body 15 between a position in which the opening of the cavity 16 is occupied by the plate 12, which is substantially coplanar with the upper face of the work surface 4, and a position in which the opening of the cavity 16 is occupied by a different portion of the body 15 because the plate 12 is inside the base 4a. The plate 12 is at least as long as the maximum dimension of the metal sheet 3 along the axis Y.
The machine 1 operates as follows.

The positioning means 6 collects a sheet 3 from the loading station 8 and move the sheet 3 onto the work surface 4 and away from and towards the work unit 5 which carries out the operations previously programmed by the operator; subsequently, the positioning means 6 move the sheet 3 along the axis X at a predetermined speed, making the sheet 3 pass between the plate 12 and the cross member 13. During this passage of the sheet 3, the device 14 is moved along the entire length of the cross member 13 and scans the entire sheet 3. As already stated, the device 14 is of a known type and is operable to measure the distance between itself and the reflector plate 12, where this is not covered by portions of the sheet 3, in order to measure the inner and outer perimeter profiles of the sheet 3. The data gathered by the device 14 are transmitted to the control unit 7 which processes them and compares them with the data contained in its memory and relating to the work programme previously entered into the control unit 7 by the operator.

If the perimeter profiles of the sheet 3 as measured by the device 14 do not correspond to those which should have resulted from the work programme entered into the control unit 7, this latter activates a device 22 signalling that the measured data and the programmed data do not correspond. This device 22 can be constituted by a display unit which also shows the area of the sheet 3 in which the aforesaid data do not correspond. If the work unit 5 is a punching machine, once the area where the data do not correspond has been identified, the control unit 7, which controls the operating programme, can work out which tool was programmed to work on the area of the sheet 3 affected and thus which tool is responsible for the incorrect working of the sheet 3. This information concerning the tool can also be displayed by the device 22, enabling the operator to stop the machine and carry out any maintenance work required. Once the operation measuring the perimeter profiles of the sheet 3 is complete, this latter is moved by the means 6 towards the unloading station 11 and deposited there, releasing the means 6 to collect a second sheet 3 from the loading station 8 in preparation for the work programme to begin on the new sheet 3.

During the working of the sheet 3, the plate 12 remains inside the base 4a to prevent any metal scraps from falling onto it. During the operation of measuring the dimensions of the sheet 3, the plate 12 is substantially coplanar with the upper surface of the work surface 4 and is protected from any metal scraps by the strips 18 on which the sheet 3 rests during its passage between the cross member 13 and the plate 12; the strips 18 clean the lower surface of the sheet 3 while this is being moved.

There are clear and numerous advantages to a machine tool 1 constructed according to the description of the present invention.

In particular, a machine is provided which not only carries out the working programme on the sheet metal automatically but also, again automatically, checks every single sheet on completion of the work cycle to ensure that this work has been executed correctly. This checking enables the machine to be stopped as soon as any incorrect working is reported in order to adjust the machine and prevent further sheets being incorrectly worked. If such machines are operated in shifts with reduced personnel (night shifts, for example), this automatic control of every sheet represents a significant saving since it avoids the need to discard a large number of sheets which have been worked, but which possibly have minor imperfections. In addition, the machine has a system which also identifies and displays to the operator the area of the sheet which contains any imperfection in the work, and, if the machine includes a punching unit, the aforesaid system identifies and reports the tool responsible for the imperfect work. Since the sheet is moved along an axis during the control operation, the laser device which checks the perimeter profiles of the sheet need only be movable along an axis orthogonal to that of the movement of the sheet. The fact that the laser device moves only along one axis clearly simplifies construction and speeds up the control of the dimensions of the sheet. Finally, it should be emphasised that the machine uses a system which protects the reflector plate from any falling metal swarf.

Finally, it is clear that the machine tool 1 described and illustrated herein may be modified and varied without by this departing from the scope of the present invention.

## Claims

1. A machine tool for working sheet metal, of a type which includes:
a work surface (4) for supporting a sheet (3);
a work unit (5) operable to carry out the work on the said sheet (3);
positioning means (6) for moving the said sheet (3) over the said work surface (4) along orthogonal first and second horizontal axes (X) and (Y); and
an electronic control unit (7) for managing the operating cycle and controlling the said work unit (5) and the said means (6);
characterised in that it includes a system (2), controlled by the said control unit (7), for checking the inner and outer perimeter profiles of the said sheet (3) on the said work surface (4) on completion of a work cycle, by means of a device (14) producing a laser beam.

2. A machine according to Claim 1, characterised in that the said system (2) includes a reflector plate (12) carried by the said work surface (4) and having a longitudinal axis parallel to the said second horizontal axis (Y), and in that the said device (14) emitting a laser beam is movable along an axis parallel to the second horizontal axis (Y), driven by an electric motor (14a) controlled by the control unit (7); the said device (14) being arranged above the said plate (12) and operable to measure the inner and outer perimeter profiles of the said sheet (3).

3. A machine according to Claim 2, characterised in that the said reflector plate (12) is movable, controlled by a second motor (21) between a first position in which it is substantially coplanar with the upper surface of the said work surface (4) and a second position in which it lies inside a base (4a) supporting the said work surface (4), at a lower level than the upper surface of the said work surface (4).

4. A machine according to Claim 3, characterised in that the said system (2) includes a rotatable body (15) arranged in a cavity (16) formed in the said work surface (4); the axis of rotation of the said body (15) being parallel to the said second axis (Y) and the entire length of the outer surface of the body (15) having a facet (17) engaged by the said plate (12), and the said second motor (21) controlled by the control unit (7) being operable to rotate the said body (15) between a position in which the opening of the cavity (16) is occupied by the said plate (12) and a position in which the opening of the said cavity (16) is occupied by a different portion of the said body (15) the said plate (12) being inside the said base (4a).

5. A machine according to any preceding Claim, characterised in that it includes a cross member (13) ranged above the work surface (4) at a predetermined distance therefrom to support the said device (14); the longitudinal axis of the said cross member (13) being parallel to the second axis (Y).

6. A machine according to any preceding Claim, characterised in that the said positioning means (6) move the said sheet (3), at the end of a working cycle, along the said first axis (X) at a predetermined speed, passing the said sheet (3) under the said device (14) which, during this passage, is moved along an axis parallel to the said second axis (Y) in order fully to scan the said sheet (3) and thus measure the inner and outer perimeter profiles of the said sheet (3).

7. A machine according to Claim 6, characterised in that the said control unit (7) includes means for processing the data transmitted by the device (14) relating to the measurements carried out on the sheet (3), means for comparing the data from the said device (14) and the data already entered into the memory of the control unit (7) itself and relating to the work programme, and means (22) for indicating that the measured data and the programmed data do not correspond.

8. A machine according to Claim 7, characterised in that the said indicating means include a display unit (22) which also indicates the area of the sheet (3) in which the data do not correspond.
